# EUROPEAN PATENT SPECIFICATION

(11) **EP 1 510 551 B1**
(45) Date of publication and mention of the grant of the patent: **16.04.2008**
(21) Application number: 04016898.1
(22) Date of filing: 17.07.2004
(51) Int. Cl.: C08L 67/02, C08L 53/02

(54) **Blend of polyester and block copolymers of monovinylaromatic monomer and conjugated diene**
Mischung von Polyester und Blockcopolymeren aus Vinylaromaten und konjugierten Dienen
Mélange de polyester et de polymères à blocs de monomères monovinyliques aromatiques et de diènes conjugués

(30) Priority: 14.08.2003 US 494792 P
(43) Date of publication of application: 02.03.2005
(73) Proprietor: BASF SE, 67056 Ludwigshafen (DE)
(72) Inventor: Knoll, Konrad, Dr., 68199 Manheim (DE); Niessner, Norbert, Dr., 67159 Friedelsheim (DE); Dardin, Ulrike, Dr., 69514 Laudenbach (DE); Wagner, Daniel, Dr., 67098 Bad Dürkheim (DE)

(56) References cited:
- EP-A- 0 727 461
- EP-B- 0 800 554
- US-A- 4 584 346
- US-A- 5 041 499
- US-A- 5 391 619
- US-A- 5 750 268
- US-A- 6 031 053
- US-B1- 6 197 889
- US-B1- 6 521 712

## Description

The invention relates to polymer blend composition comprising from 25 to 75 % by weight, based on the total weight of the polymer blend, of a block copolymer of from 35 to 85% by weight of vinylaromatic monomer and 15 to 65% by weight of conjugated diene monomer, said block copolymer comprising at least one block (B/S) composed of vinylaromatic monomer and conjugated diene with random distribution, and a 1,2-vinyl content from 10 to 20%, and from 25 to 75 % by weight, based on the total weight of the polymer blend, of a glycol-modified poly(ethylene terephthalate) (PETG). The invention further relates to multilayer laminates or films with polyester layers and layers made of this polymer blend composition.

### Background

Polymer blends of styrene-butadiene block copolymers and modified or unmodified poly(ethylene terephthalate) with good clarity, stiffness and toughness are known and described for example in EP-A 0 727 461.

US 5,391,619 discloses to improve the impact strength of such a polymer blend by employing an inorganic peroxide.

A laminate with a glyclol-modified poly(ethylene terephthalate) layer bonded with an adhesive on a styrene resin layer are known for example from JP-A 2002036456.

EP-B 800554 discloses blends of elastomeric block copolymers with at least one block (B/S) composed of vinylaromatic monomer and conjugated diene with random distribution and thermoplastically processable or thermosetting polymers.

### Summary of the Invention

It is an object of this invention to provide a polymer blend having improved transparency and low cloudiness. A further objective of this invention is to provide a polymer blend with excellent adhesion to polyesters, which allows to use the polymer blend in multilayer films of polyesters.

In accordance with this invention a polymer blend composition is provided, comprising:
a) from 25 to 75 % by weight, based on the total weight of the polymer blend, of a block copolymer of from 35 to 85% by weight of vinylaromatic monomer and 15 to 65% by weight of conjugated diene monomer, said block copolymer comprising at least one block (B/S) composed of vinylaromatic monomer and conjugated diene with random distribution, and a 1,2-vinyl content from 10 to 20%, and
b) from 25 to 75 % by weight, based on the total weight of the polymer blend, of a glycol-modified poly(ethylene terephthalate) (PETG).

### Detailed description of the invention

Vinylaromatic monomers, which may be used include styrene, α-methylstyrene, p-methylstyrene, ethylstyrene, tert-butylstyrene, vinyl toluene or mixures of these, preferably styrene.

Preferred dienes are butadiene, isoprene, 2,3-dimethylbutadiene, 1,3-pentadiene, 1,3-hexadienes or piperylene or mixtures of these, particularly preferably 1,3-butadiene.

The block copolymer is most preferably made of units derived form styrene and butadiene.

Surprisingly we found, that the compatibility with polyesters can be enhanced when the block copolymer comprise a block (B/S) composed of vinylaromatic monomer and conjugated diene with random distribution. Transparent polymer blends can thus be made over wide ranges of compositions. The random distribution of the B/S-block can be achieved by simultaneously charging vinylaromatic monomer and conjugated diene in the presence of a polar compound as randomisers, such as ethers or amines or in the presence of a potassium salt. Preferably the polymerisation of the B/S-block is conducted in the presence of tetrahydrofuran (THF) in an amount of 1 to 5 Vol.-%, based on the solvent used. In the case of a potassium salt preferably use is made of a potassium alcoholate, such as potassium 2-methylbutanolate, potassium 2,3-dimethyl-3-pentanolate, potassium 2-methylhexanolate, potassium 3,7-dimethyl-3.octanolate or potassium 3-ethyl-3-pentanolate, in the molar ratio of anionic polymerisation initiator to potassium alcoholate from 10:1 to 100:1, preferably from 30:1 to 70:1.

The vinyl content, which is the relative proportion of 1,2-linkages of the diene units, based on the total of 1,2, 1,4-cis and 1,4-trans linkages, can be controlled by the appropriate selection of the randomiser. In case of use of a potassium alcoholate the 1,2-vinyl content of the block (B/S) is normally from 10 to 20%, in particular from 12 to 16%. In case of THF as randomiser the vinyl content rises with the amount of THF. At levels which are necessary to achieve random distribution the vinyl content is normally above 20%.

It can be prepared by sequential anionic polymerisation and can have a linear structure or star-shaped structure. The star-shaped structure can be obtained by coupling of living polymer chains or by using an multi-functional initiator. The block copolymers preferably comprise two blocks S made of vinylaromatic monomers at the end of the polymer chain in case of the linear structure or blocks S made of vinylaromatic monomers at the end of each polymer branch in case of the star-shaped structure.

In one preferred embodiment the block copolymer is composed of at least two blocks S made of vinylaromatic monomers and at least one block (B/S) composed of vinylaromatic monomer and conjugated diene with random distribution and wherein the proportion of blocks (B/S) is from 5 to 35 % by weight, based on the total weight of the block copolymer. The preparation and structures of such block copolymers are described for example in US 6,031,053 or US 6,197,889.

Other preferred embodiments are described for example in US 6,521,712 B1.

The second component of the polymer blend composition is glycol modified poly(ethylene terephthalate) (PETG).

Poly(ethylene terephthalate) may be modified by comonomers, such as diols, diacids, hydroxyacids or mixtures thereof in an amount in the range of 5 to 20% by weight. Modified Poly(ethylene terephtalate) prepared by 50 to 80 mol% ethylene glycol and 20 to 50 mol% 1,4-cyclohexanedimethanol are preferred.

The polymer blend composition may be prepared by melt blending of the components in an single-screw or twin-screw extruder, or other conventional plasticating apparatuses, such as Brabender mixers or Banbury mixers.

Additives such as stabilizers, antioxidants, antiblocking agents, mould release agents, dyes and pigments, flame retardants, fillers and reinforcing agents, such as glass fibers may be blended in usual amounts.

The polymer blend composition according to this invention can be used advantageously in laminates or films of polyesters. A preferred laminate or film comprises at least one layer of the polymer blend according to this invention and further at least on layer of polyester. Further layers of polyester or at least one layer of a block copolymer of from 35 to 85% by weight of vinylaromatic monomer and 15 to 65% by weight of conjugated diene monomer, said block copolymer comprising at least one block (B/S) composed of vinylaromatic monomer and conjugated diene with random distribution are possible.

Most preferred are three-layered film with the layer sequence:
L1) glyclol modified poly(ethylene terephtalate)
L2) polymer blend composition according to this invention
L3) glyclol modified poly(ethylene terephtalate)
where the glyclol modified poly(ethylene terephtalate) may function as a barrier layer for water vapour or gases.

## Claims

1. A polymer blend composition comprising
a) from 25 to 75 % by weight, based on the total weight of the polymer blend, of a block copolymer of from 35 to 85% by weight of vinylaromatic monomer and 15 to 65% by weight of conjugated diene monomer, said block copolymer comprising at least one block (B/S) composed of vinylaromatic monomer and conjugated diene with random distribution, and a 1,2-vinyl content from 10 to 20 %, and
b) from 25 to 75 % by weight, based on the total weight of the polymer blend, of a glycol modified poly(ethylene terephthalate) (PETG).

2. The polymer blend composition of claim 1, wherein said block copolymer is a made of units derived form styrene and butadiene.

3. The polymer blend composition of claim 1, wherein the block copolymer has a linear structure and two blocks S made of vinylaromatic monomers at the end of the polymer chain.

4. The polymer blend composition of claim 1, wherein the block copolymer has a star-shaped structure with blocks S made of vinylaromatic monomers at the end of each polymer branch.

5. The polymer blend composition of claim 1, wherein the block copolymer is composed of at least two blocks S made of vinylaromatic monomers and at least one block (B/S) composed of vinylaromatic monomer and conjugated diene with random distribution and wherein the proportion of blocks (B/S) is from 5 to 35 % by weight, based on the total weight of the block copolymer.

6. The polymer blend composition of claim 1, wherein the 1,2-vinyl content of the block (B/S) is from 12 to 16%.

7. A laminate or film comprising at least one layer of the polymer blend of claim 1.

8. A three-layered film with the layer sequence
L1) glycol modified poly (ethylene terephtalate)
L2) polymer blend composition according to claim 1
L3) glycol modified poly (ethylene terephtalate)

## Patentansprüche

1. Polymermischungszusammensetzung, umfassend:
a) 25 bis 75 Gew.-%, bezogen auf das Gesamtgewicht der Polymermischung, eines Blockcopolymeren aus 35 bis 85 Gew.-% vinylaromatischem Monomer und 15 bis 65 Gew.-% konjugiertem Dienmonomer, wobei das Blockcopolymer mindestens ein Block (B/S) umfasst, bestehend aus vinylaromatischem Monomer und konjugiertem Dien mit statistischer Verteilung, und einem 1,2-Vinylgehalt von 10 bis 20 %, und
b) 25 bis 75 Gew.-%, bezogen auf das Gesamtgewicht der Polymermischung, eines Glycol-modifizierten Poly(ethylenterephthalat) (PETG).

2. Polymermischungszusammensetzung von Anspruch 1, wobei das Blockcopolymer aus Einheiten gemacht ist, die von Styrol und Butadien abgeleitet sind.

3. Polymermischungszusammensetzung von Anspruch 1, wobei das Blockcopolymer eine lineare Struktur und zwei Blöcke S aus vinylaromatischen Monomeren am Ende der Polymerkette hat.

4. Polymermischungszusammensetzung von Anspruch 1, wobei das Blockcopolymer eine sternförmige Struktur mit Blöcken S aus vinylaromatischen Monomeren am Ende jedes Polymerzweiges hat.

5. Polymermischungszusammensetzung von Anspruch 1, wobei das Blockcopolymer aus mindestens zwei Blöcken S aus vinylaromatischen Monomeren und mindestens einem Block (B/S), bestehend aus vinylaromatischem Monomer und konjugiertem Dien mit statistischer Verteilung, aufgebaut ist, und worin der Anteil an Blöcken (B/S) zwischen 5 und 35 Gew.-%, bezogen auf das Gesamtgewicht der Blockcopolymere, liegt.

6. Polymermischungszusammensetzung von Anspruch 1, wobei der 1,2-Vinylgehalt des Blockes (B/S) zwischen 12 und 16 % liegt.

7. Laminat oder Folie, umfassend mindestens 1 Schicht der Polymermischung von Anspruch 1.

8. Dreischichtige Folie mit der Schichtsequenz
L 1) Glycol-modifiziertes Poly(ethylenterephthalat)
L 2) Polymermischungszusammensetzung gemäß Anspruch 1
L 3) Glycol-modifiziertes Poly(ethylenterephthalat)

## Revendications

1. Composition de mélange de polymères comprenant :
a) de 25 à 75 % en poids, sur la base du poids total du mélange de polymères, d'un copolymère séquencé composé de 35 à 85 % en poids de monomère vinylaromatique et de 15 à 65 % en poids de monomère de diène conjugué, ledit copolymère séquencé comprenant au moins un bloc (B/S) composé de monomère vinylaromatique et de diène conjugué à distribution statistique, et ayant une teneur en 1,2-vinyle de 10 à 20 %, et
b) de 25 à 75 % en poids, sur la base du poids total du mélange de polymères, d'un poly(éthylène téréphtalate) modifié par du glycol (PETG).

2. Composition de mélange de polymères suivant la revendication 1, dans laquelle ledit copolymère séquencé est composé d'unités dérivées de styrène et de butadiène.

3. Composition de mélange de polymères suivant la revendication 1, dans laquelle le copolymère séquencé possède une structure linéaire et deux blocs S constitués de monomères vinylaromatiques au bout de la chaîne polymère.

4. Composition de mélange de polymères suivant la revendication 1, dans laquelle le copolymère séquencé a une structure en étoile, les blocs S constitués de monomères vinylaromatiques se trouvant au bout de chaque branche de polymère.

5. Composition de mélange de polymères suivant la revendication 1, dans laquelle le copolymère séquencé est composé d'au moins deux blocs S constitués de monomères vinylaromatiques et d'au moins un bloc (B/S) constitué de monomère vinylaromatique et de diène conjugué avec une distribution statistique, et dans laquelle la proportion des blocs (B/S) est de 5 à 35 % en poids, sur la base du poids total du copolymère séquencé.

6. Composition de mélange de polymères suivant la revendication 1, dans laquelle la teneur en 1, 2-vinyle du bloc (B/S) est de 12 à 16 %.

7. Produit laminé ou film comprenant au moins une couche du mélange de polymères suivant la revendication 1.

8. Film tricouche présentant la séquence de couches suivante :
L1) poly(éthylène téréphtalate) modifié par du glycol
L2) composition de mélange de polymères suivant la revendication 1
L3) poly(éthylène téréphtalate) modifié par du glycol
